# EUROPÄISCHE PATENTANMELDUNG

(11) **EP 1 669 656 A1**
(43) Veröffentlichungstag der Anmeldung: **14.06.2006**
(21) Anmeldenummer: 05024405.2
(22) Anmeldetag: 09.11.2005
(51) Int. Cl.: F16L 37/092

(54) **Verbindungsvorrichtung für Rohre**

(30) Priorität: 07.12.2004 DE 202004018941 U
(71) Anmelder: IPA Produktions- & Vertriebsges.m.b.H., 1230 Wien (AT)
(72) Erfinder: Ogris, Dipl. Ing. Bernhard, 2511 Pfaffstätten (AT)
(74) Vertreter: Schwabe - Sandmair - Marx

(57) **Zusammenfassung**

Eine Verbindungsvorrichtung (10), um Rohre (32) und vorzugsweise Kunststoffrohre bzw. Verbundrohre anzuschließen, mit einer Stützhülse (12), auf die das Rohr (32) aufschiebbar ist, mit einem Haltering (14) und einem Bund (30,40), der die Stützhülse mit dem Haltering verbindet, wobei der Haltering (14) eine sich in einer Aufschubrichtung für das Rohr (32) erweiternde Fläche bzw. Führungsfläche (18b) am Innenumfang aufweist sowie einen Klemmring (16), welcher im Haltering (14) aufgenommen ist, und wobei der Klemmring (16) eine Außenfläche bzw. äußere Führungsfläche (18a) aufweist, die zu der sich erweiternden Führungsfläche (18b) am Innenumfang des Halteringes (14) korrespondiert.

## Beschreibung

Die Erfindung betrifft eine Verbindungsvorrichtung, um Rohre und vorzugsweise Kunststoffrohre bzw. Verbundrohre anzuschließen, mit einer Stützhülse, auf die das Rohr aufschiebbar ist, mit einem Haltering und mit einem Bund, der die Stützhülse mit dem Haltering verbindet, gemäß dem Anspruch 1. Im Stand der Technik sind diverse Verbindungsvorrichtungen bekannt, die etwa im Heizungsbaubereich für Zentralheizungen zum Einsatz gelangen oder die in Sanitäranlagen bzw. Trinkwasseranlagen verwendet werden.

Dabei sind insbesondere Verbindungsvorrichtungen bekannt, die mittels Presszangen dauerhaft verpresst werden müssen, um ein dichte Verbindung zwischen einem Rohr und insbesondere einem Kunststoffrohr oder auch Verbundrohren herzustellen. Verbundrohre sind Rohre mit einer Metallschicht, die in der Regel eine innere Kunststoffschicht und eine äußere Kunststoffschicht um sich angeordnet haben. Es gibt auch Schraubverbindungen, wie auch Steckverbindungen, die jedoch entweder kompliziert zu handhaben sind oder aber eine Vielzahl von Teilen benötigen, um einsetzbar zu sein.

So ist beispielsweise aus der WO 03/044416 A1 eine Steckverbindung bekannt, die eine Vielzahl von einzelnen Bestandteilen erfordert, was insbesondere nachteilig ist, wenn diese Verbindung gelöst werden muss. Auch handelt es sich hier nicht nur um eine umständliche, sondern auch um eine teure Lösung. Es ist dementsprechend eine Aufgabe gemäß der vorliegenden Erfindung, eine Verbindungsvorrichtung vorzuschlagen, die einfach herstellbar ist und eine dauerhaft dichte Verbindung bereitstellen kann.

Gemäß der Erfindung wird diese Aufgabe durch eine Verbindungsvorrichtung gelöst, bei der der Haltering eine sich in einer Aufschubrichtung für das Rohr erweiternde Fläche am Innenumfang aufweist, wobei ein Klemmring vorgesehen ist, der im Haltering aufgenommen ist, und wobei der Klemmring eine Außenfläche aufweist, die zu der sich erweiternden Fläche am Innenumfang des Halterings korrespondiert. Durch diese Ausbildung ist es möglich, ein Rohr in die Verbindungsvorrichtung einzuschieben, wobei dieses dann auch in den Innendurchmesser des Klemmrings eingeführt wird. Wird dann am Rohr angezogen, wird der Klemmring in seinem Durchmesser komprimiert, was aufgrund der gegeneinander arbeitenden Flächen am Innenumfang des Halterings und am Außenumfang des Klemmrings begünstigt wird. Der Klemmring kann auf diese Weise das Rohr innerhalb der Verbindungsvorrichtung festklemmen und wenn am Rohr stärker angezogen wird, verstärkt sich automatisch auch die Haltekraft mit der das Rohr innerhalb der Verbindungsvorrichtung gemäß der Erfindung gehalten wird.

Erkennbar weist die erfindungsgemäße Verbindungsvorrichtung im Wesentlichen drei Teile auf, nämlich die Stützhülse mit dem daran befindlichen Bund, dem daran festgelegten Haltering und dem in den Haltering aufgenommenen Klemmring.

Vorteilhafterweise hat der Klemmring an seinem Innenumfang eine Festlegungsstruktur, wobei sich hierzu besonders Zacken eignen, die vollumfänglich angeordnet sind. Die am Innenumfang des Klemmrings eingearbeiteten Zacken können sich in das Material eines festzulegendes Kunststoffrohres oder Verbundrohres eingraben und damit festlegen. Wird der Klemmring radial komprimiert, graben sich die Festlegungsstrukturen zusätzlich in das Material des festzulegenden Rohres ein, was zu einer zusätzlichen Haltekraft führt.

Vorzugsweise kann der Klemmring auch noch eine Dehnfuge oder dgl. aufweisen, d.h., der Klemmring kann mit einem axial angelegten Schlitz ausgebildet sein, so dass eine radiale Komprimierung des Klemmringes im Falle des Auftretens einer axial wirkenden Kraft, also einer Abzugskraft, noch leichter erfolgen kann.

In Bezug auf die vorteilhafterweise vorzusehende Festlegungsstruktur am Klemmring hat es sich als mit zusätzlichen Vorteilen behaftet erwiesen, wenn die Festlegungsstruktur wenigstens einen Zacken aufweist, dessen kurzer Schenkel zum Bund bzw. in Aufschubrichtung des Rohres und dessen langer Schenkel entgegen der Aufschubrichtung des Rohres ausgerichtet ist. Diese Ausbildung führt dazu, dass beim Einschieben des Rohres das stirnseitige Rohrende über die langen Schenkel am Innenumfang des Klemmeringes rutschen kann, während beim Anziehen des Rohres entgegen der Aufschubrichtung der steile, kurze Schenkel der Festlegungsstruktur, etwa eines Zackens, sich in das Material des Rohre gräbt und dieses fixiert. Dabei wird beim Anreißen bzw. Anziehen am Rohr auch der Klemmring axial entgegen zur Aufschubrichtung des Rohres belastet, so dass zusätzlich durch die Fläche bzw. Führungsfläche am Innenumfang des Halteringes und die entgegengesetzt ausgerichtete Führungsfläche am Außenumfang des Klemmringes in das Kunststoffmaterial des zu haltenden Rohres bzw. Kunststoffrohres bzw. Kunststoffrohres eingreift.

Dabei kann die Festlegungsstruktur, die bevorzugt umfänglich ausgebildet ist, auch eine axiale Erstreckung oder Teilerstreckung aufweisen, um ein Verdrehen des Rohres relativ zu dem Klemmring verhindern zu können. D.h., zusätzlich zu den umfänglich ausgebildeten Festlegungsstrukturen können auch axial ausgebildete Zähne oder Zacken vorgesehen sein, die einer Drehbewegung des Rohres innerhalb der Verbindungsvorrichtung entgegenwirken können. Es kann sich auch um eine gewindeartige Struktur handeln, die dann sowohl gegen ein Abziehen wie auch gegen ein Verdrehen des Rohres wirken kann.

Bevorzugt weist die Stützhülse an ihrem Außenumfang wenigstens eine O-Ring-Dichtung auf, die im Bereich unterhalb des Klemmringes im montierten Zustand der Verbindungsvorrichtung zu liegen kommt. Wird eine axial auf das Rohr einwirkende Abzugskraft ausgeübt, wird der Klemmring radial komprimiert und es wird ein zusätzlicher Druck über den Innenumfang des festzulegenden Rohres auf die O-Ring-Dichtung ausgeübt, was eine zusätzliche Dichtfunktion bewirkt.

Eine weitere O-Ring-Dichtung ist vorzugsweise so angeordnet, dass sie vor dem Klemmring liegt, was insofern vorteilhaft ist, weil auch gegenüber niedrigen Drucken bereits die erste O-Ring-Dichtung zu einer ausreichenden Dichtigkeit führen kann, auch wenn keine Zugkraft ausgeübt wird, die den Klemmring radial komprimiert.

Bevorzugt wird am Bund und/oder am Haltering ein Verdrehsicherungsabschnitt vorgesehen, der im Falle einer auf die Verbindungsvorrichtung und/oder das Rohr ausgeübte Drehkraft dazu führt, dass der Haltering gegenüber der Stützhülse bzw. gegenüber dem Bund nicht verdreht werden kann. Als ein derartiger Verdrehsicherungsabschnitt kann beispielsweise ein Bolzen angesehen werden, der einem Verdrehen des Halterings gegenüber dem Bund eine Sperre entgegensetzt. Auch eine axial erstreckte Schulter, die am Bund vorgesehen sein kann, die an ein Widerlager am Haltering anstößt, kann einem Verdrehen der besagten Bestandteile wirksam entgegenstehen.

Zwar können die Bestandteile der erfindungsgemäßen Verbindungsvorrichtung insgesamt aus Metall gefertigt sein, insbesondere aus Messing oder dgl., jedoch wird es bevorzugt, dass beispielsweise der Haltering aus Kunststoffmaterial ist. Auch die Stützhülse kann aus Kunststoffmaterial gefertigt sein. In Bezug auf den Klemmring ist es bislang zu bevorzugen, diesen aus Metall zu fertigen, insbesondere aus Messing, um den Festlegungsstrukturen eine hinreichende Festigkeit zu verschaffen, so dass sich diese in das Material eines Kunststoffrohres bzw. eines Verbundrohres hineinfressen können. Jedoch ist auch Kunststoff als Fertigungsmaterial denkbar.

In Bezug auf die erfindungsgemäße Verbindungsvorrichtung ist noch festzuhalten, dass diese ohne jedes Werkzeug montiert werden kann. Lediglich das Entgraten bzw. Kalibrieren des Rohres vor dem Einschieben des Rohrendes in die erfindungsgemäßen Verbindungsvorrichtung ist durchzuführen. Um die Verbindungsvorrichtung zu lösen, ist es nur erforderlich, den Haltering, der etwa über ein Gewinde am Bund der Stützhülse festgelegt sein kann, von dem Bund zu lösen, axial über das Rohr zu verschieben, so dass der Klemmring frei wird und radial expandiert werden kann, um das Rohr wieder freizugeben.

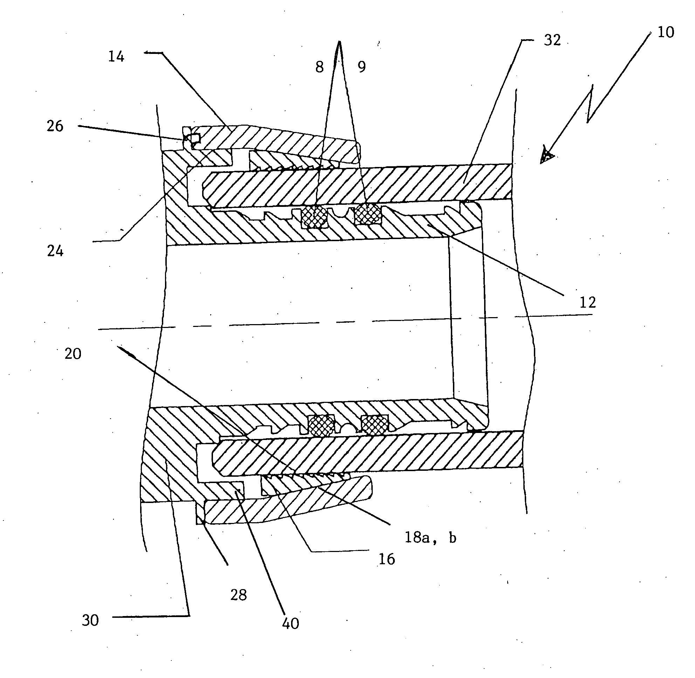

Nachfolgend wird die vorliegende Erfindung unter Bezugnahme auf die beigefügte Figur näher erörtert, wobei weitere Merkmale, Vorzüge sowie Zielsetzungen der Erfindung offenbart werden. In der Darstellung zeigt die Figur einen axialen Längsschnitt durch eine Ausführungsform der Verbindungsvorrichtung gemäß der Erfindung.

Die erfindungsgemäße Verbindungsvorrichtung ist allgemein mit dem Bezugszeichen 10 benannt. Die Verbindungsvorrichtung, nachfolgend "Steckfitting" genannt, umfasst eine Stützhülse 12 mit mehreren umfänglich verlaufenden Zacken und umfänglich verlaufenden Nuten. In die umfängliche verlaufenden Nuten sind zwei O-Ring-Dichtungen 8, 9 eingesetzt. Die in Aufschubrichtung eines auf die Stützhülse 12 aufgeschobenen Rohres liegt die hintere O-Ring-Dichtung 8 unterhalb eines Halteringes 14 und eines Klemmringes 16, die am Außenumfang des Rohres 32 angesetzt sind. Der Haltering 14 sitzt auf einem Überlappensabschnitt 40 an einem Bund 30 der Steckverbindung 10. Am Außenumfang des Überlappungsabschnittes bzw. am Innenumfang des Halterings 14 ist ein Gewinde vorgesehen, über das der Haltering an den Körper der Steckverbindung 10 festgelegt werden kann. Statt eines Gewindes kann auch eine Rastvorrichtung oder dgl. eingesetzt werden, um den Haltering an dem Abschnitt 40 festzulegen. Ein Anschlag 28 begrenzt die Beweglichkeit des Halteringes 14 in Aufschubrichtung des Halterings 14 bzw. in Aufschubrichtung des Rohres 32. Ein Verdrehsicherungsabschnitt 26 kann am Bund 30 vorgesehen sein, um in Eingriff mit dem Haltering 14 zu gelangen, um sich einer Drehkraft widersetzen zu können, die auf den Haltering 14 einwirken könnte.

Am Außenumfang des Klemmringes 16 ist eine Führungsfläche 18a vorgesehen, die in Aufschubrichtung des Rohres weiter wird und dem Klemmring im Querschnitt eine keilförmige Gestalt verleiht. Dieser Keil wird erkennbar in Aufschubrichtung weiter bzw. in Abzugsrichtung des Rohres schmäler.

Der Haltering 14 weist an seiner Innenfläche eine korrespondierende Führungsfläche 18b auf, die ebenfalls in Aufschubrichtung des Rohres 32 weiter wird.

Diese Ausgestaltung der Führungsflächen 18a, 18b führt dazu, dass beim Einschieben des Rohres der Klemmring über das dargestellte Spiel zwischen dem stirnseitigen Ende des Elementes 40 und dem diesem zugewandten Ende des Klemmringes 16 bewegt werden kann, um ohne Widerstand radial expandiert werden zu können, da die Führungsflächen 18a, 18b außer Eingriff gebracht werden, wenn das Rohr in den ringförmigen Hohlraum zwischen der Stützhülse und dem Klemmring bzw. dem Haltering eingeschoben wird. Wird nun ein Rohr nach dessen Einschub in den ringförmigen Spalt gezogen, greifen die Eingriffsstrukturen 20 am Innenumfang des Klemmringes in das Material am Außenumfang des Rohres 32 ein, legen sich bzw. beißen sich fest und der Klemmring wird mitgenommen, wodurch dessen Führungsfläche 18a mit der Führungsfläche 18b am Haltering in Berührung kommt. Der Klemmring 16 wird durch die axial am Rohr 32 eingreifende Abzugskraft radial komprimiert und eine große Haltekraft wird ausgeübt, die das Rohr einerseits axial fixiert und andererseits zusammen mit dem Klemmring im Bereich des Klemmringes radial komprimiert, wodurch der Innenumfang des festzulegenden Rohres 32 zunächst an die in Aufschubrichtung hintere O-Ring-Dichtung 8 angepresst wird, um eine zusätzliche Dichtwirkung zu entfalten. Bei weiterer Erhöhung der Abzugskraft kann der Dichtring durch zusätzliche Kompression eine zusätzliche Dichtung bewirken. In Bezug auf die Festlegungsstruktur ist darauf hinzuweisen, dass diese in Aufschubrichtung des Rohres 32 eine relativ flache Flanke aufweist, während die Struktur 20 entgegen der Aufschubrichtung, d.h., in Abschubrichtung des Rohres 32 eine steile Flanke aufweist, so dass sich die damit ergebende Zacke bei Auftreten einer axial wirkenden Abzugskraft in das Material des Rohres 32 eingräbt, wobei das Rohr meist aus Kunststoff sein wird, bzw. eine äußere Schicht aus Kunststoff aufweisen wird.

Um die Lage des Rohres in der erfindungsgemäßen Verbindungsvorrichtung prüfen zu können, kann der Haltering 14 bzw. kann der Abschnitt 40 mit einem Loch versehen sein, durch den die Lage des stirnseitigen Rohres 32 überprüfbar ist. Es ist auch möglich, eine Anschlagstufe an der Stützhülse bzw. am Anschlag des Bundes vorzusehen, derart, dass das aufzuschiebende Rohr mit seinem aus Kunststoff bestehenden Innenumfang anschlägt und zu galvanischen Trennung zwischen dem Material dem Bundes bzw. der Stützhülse, insofern diese aus Metall ist und einer Metallschicht eines Verbundrohres ein Abstand eingerichtet ist, der zu einer elektrischen Isolation und damit zu einer galvanischen Trennung unterschiedlicher Metallmaterialien führt.

## Patentansprüche

1. Verbindungsvorrichtung, um Rohre und vorzugsweise Kunststoffrohre bzw. Verbundrohre anzuschließen, mit einer Stützhülse (12), auf die das Rohr (32) aufschiebbar ist,
mit einem Haltering (14),
mit einem Bund (30, 40), der die Stützhülse mit dem Haltering verbindet,
**gekennzeichnet durch** die folgenden Merkmale:
- der Haltering (14) weist eine sich in einer Aufschubrichtung für das Rohr erweiternde Fläche bzw. Führungsfläche am Innenumfang auf;
- ein Klemmring (16) ist im Haltering (14) aufgenommen, wobei der Klemmring eine Außenfläche bzw. äußere Führungsfläche (18a) aufweist, die zu der sich erweiternden Führungsfläche (18b) am Innenumfang des Halteringes korrespondiert.

2. Verbindungsvorrichtung nach Anspruch 1, **dadurch gekennzeichnet, dass** der Klemmring (16) an seinem Innenumfang eine Festlegungsstruktur (20) aufweist.

3. Verbindungsvorrichtung nach einem der Ansprüche 1 oder 2, **dadurch gekennzeichnet, dass** der Klemmring (16) eine Dehnfuge oder dgl. aufweist.

4. Verbindungsvorrichtung nach einem der Ansprüche 1 bis 3, **dadurch gekennzeichnet, dass** die Festlegungsstruktur Zacken, Zähne, eine Gewindestruktur und/oder dgl. umfasst.

5. Verbindungsvorrichtung nach einem der Ansprüche 1 bis 4, **dadurch gekennzeichnet, dass** die Festlegungsstruktur (20) wenigstens eine Struktur, bevorzugt einen Zacken umfasst, dessen kurzer Schenkel zum Bund bzw. in Aufschubrichtung des Rohres und dessen langer Schenkel entgegen der Aufschubrichtung des Rohres weist.

6. Verbindungsvorrichtung nach einem der Ansprüche 2 bis 5, **dadurch gekennzeichnet, dass** die Festlegungsstruktur, die bevorzugt umfänglich ausgebildet ist, auch eine axial erstreckte Struktur bzw. teilweise erstreckte Struktur umfasst, um einen Verdrehen des Rohres (32) relativ zur Stützhülse bzw. zum Klemmring (16) entgegenzuwirken.

7. Verbindungsvorrichtung nach einem der Ansprüche 1 bis 6, **dadurch gekennzeichnet, dass** die Stützhülse wenigstens eine O-Ring-Dichtung (8,9) aufweist, die unter dem Klemmring (16) im montierten Zustand der Verbindungsvorrichtung zu liegen kommt.

8. Verbindungsvorrichtung nach einem der voranstehenden Ansprüche, **dadurch gekennzeichnet, dass** die Stützhülse wenigstens eine O-Ring-Dichtung (8, 9) aufweist, die vor dem Klemmring (16) im montierten Zustand der Verbindungsvorrichtung zu liegen kommt.

9. Verbindungsvorrichtung nach einem der voranstehenden Ansprüche, **dadurch gekennzeichnet, dass** am Bund und/oder am Haltering (14) ein Verdrehsicherungsabschnitt vorgesehen ist.

10. Verbindungsvorrichtung nach einem der voranstehenden Ansprüche, **dadurch gekennzeichnet, dass** der Haltering und/oder die Stützhülse und/oder der Klemmring aus Kunststoff oder Metall ist.
